# EUROPÄISCHE PATENTANMELDUNG

(11) **EP 0 842 874 A2**
(43) Veröffentlichungstag der Anmeldung: **20.05.1998**
(21) Anmeldenummer: 97119525.0
(22) Anmeldetag: 07.11.1997
(51) Int. Cl.: B65G 1/08, B65G 47/88

(54) **Fliesslager - Separator**

(30) Priorität: 14.11.1996 CH 2836/96
(71) Anmelder: Kolb, Josef, 6284 Sulz (CH)
(72) Erfinder: Kolb, Josef, 6284 Sulz (CH)
(74) Vertreter: Blum, Rudolf Emil Ernst

(57) **Zusammenfassung**

Der Anschlag (10) für die Fördergüter (5') wird in seiner wirksamen Stellung mittels eines Kniegelenks (11,12) gesperrt, das sich in seiner Totpunktstellung (17) befindet. Die von den Fördergütern (5') auf den Anschlag (10) ausgeübte Kraft wird nicht auf Federn abgestützt. Ein einen möglichst kleinen Hebelarm (14,15) aufweisender erster Schwenkarm (11) des Kniegelenks (11,12) wird von einem Betätigungsgestänge in die Totpunktstellung (17) oder aus dieser heraus geschwenkt. Es sind für jedes Fördergut (5') zwei Anschläge (10) vorhanden, je ein Anschlag (10) beidseitig und quer zur Fliesslagerbahn (4) für das Fördergut. Das Betätigungsgestänge wird vom jeweils zuvorderst liegenden Fördergut betätigt.

## Beschreibung

Die Erfindung betrifft einen Fliesslager-Separator, mit einer Steuervorrichtung am Lagergestell zur Abgabe von selbsttätig verfahrbaren Fördergütern aus dem Fliesslager, wobei die Fliesslagerbahn zu einer Abgabestelle hin geneigt ist, mit einem vor der Abgabestelle befindlichen steuerbaren Anschlag zum Separieren der Fördergüter.

Ein solcher Separator ist z.B. aus den CH-Patentschriften 597 054 und 611 852 bekannt. Da schwere Fördergüter auf der geneigten Fliesslagerbahn eine erhebliche Kraft auf den steuerbaren Anschlag ausüben, wobei auch einmal, bei nicht regulärem Ablauf der Arbeitsweise, eine erhebliche Stosskraft auf den Anschlag ausgeübt wird, wird bei den bekannten Separatoren eine sehr starke Feder (Tellerfedern) verwendet zum kraftschlüssigen Halten des Anschlags in seiner wirksamen Stellung (CH-PS 597 054). Auch bei einem auf dem Markt befindlichen Separator wird der Anschlag über ein Kniegelenk mit Feder in seiner wirksamen Stellung gehalten. Zum Überwinden des Kniegelenkes muss eine zusätzliche starke Feder verwendet werden, um die Kraft der beim Kniegelenk vorhandenen Feder zu überwinden. Bei einem weiteren bekannten Separator wird eine federbelastete Wippe vorgesehen, die je nach Kippstellung den Anschlag wirksam oder unwirksam werden lässt (CH-PS 611 852). Bei den bekannten Separatoren, bei denen der Anschlag kraftschlüssig (mittels Feder) in seiner wirksamen Stellung gehalten wird, muss diese Feder je nach dem Gewicht der Fördergüter eingestellt werden, d.h. der Einstellbereich ist verhältnismässig gering, wobei der Einstellbereich für ein Gewicht des Fördergutes zwischen 4000 N und 10000 N liegt. Soll aber ein Fördergut von z.B. 1000 N gefördert werden, kann der vorhandene Separator nicht mehr verwendet werden.

Es wird die Schaffung eines Fliesslager-Separators bezweckt, der unabhängig vom Gewicht der Fördergüter arbeitet, wobei je nach Gewicht des Fördergutes keine Federn mehr verstellt werden müssen, und wobei die Steuervorrichtung einen einfachen Aufbau (also z.B. ohne Wippe) haben kann. Es soll auch keine Überlastsicherung mittels Federn (Tellerfederpaket) vorhanden sein, und es soll auch sonst keine kraftschlüssige Abstützung der Haltekraft des Anschlags vorhanden sein.

Der erfindungsgemässe Separator ist dadurch gekennzeichnet, dass sich zwischen einem Betätigungsgestänge und dem Anschlag ein Kniegelenk mit Totpunktstellung befindet, und dass das Betätigungsgestänge mit einer Schwenkfahne bewegungsverbunden ist, die in und aus dem Bewegungsweg eines an der Abgabestelle befindlichen Fördergutes am Gestell schwenkbar angelenkt ist zum Verschwenken des Kniegelenks in seine oder aus seiner Totpunktstellung und damit zum Aktivieren oder Inaktivieren des Anschlages, und dass in der Totpunktstellung das Kniegelenk, der Anschlag und ein Teil des Lagergestells formschlüssig miteinander verblockt sind ohne Zwischenschaltung einer Feder im Kraftfluss, und mit einer an der Schwenkfahne angreifenden Feder zum Halten der Schwenkfahne im Bewegungsweg der Fördergüter.

Bei dieser erfindungsgemässen Ausbildung des Separators erfolgt nunmehr eine rein formschlüssige Abstützung des Anschlages. Zur Verstellung des Kniegelenks in seine Totpunktstellung und aus dieser heraus ist nur eine geringe Kraft durch das Betätigungsgestänge erforderlich, wobei diese Kraft unabhängig ist von der Haltekraft des Anschlags.

In der Zeichnung ist ein Ausführungsbeispiel des Erfindungsgegenstandes dargestellt. Es zeigen:
Figur 1 den vorderen Teil des Betätigungsgestänges mit seiner Schwenkfahne in Seitenansicht, in schematischer Darstellung, bei nicht betätigter Schwenkfahne,
Figur 2 eine gleiche Darstellung wie in Figur 1, bei betätigter Schwenkfahne,
Figur 3 die Steuervorrichtung mit Lagergestell, in einer Draufsicht, in der Arbeitsstellung des Anschlags, und
Figur 4 eine gleiche Darstellung wie in Figur 3, in der Nicht-Betriebsstellung des Anschlags.

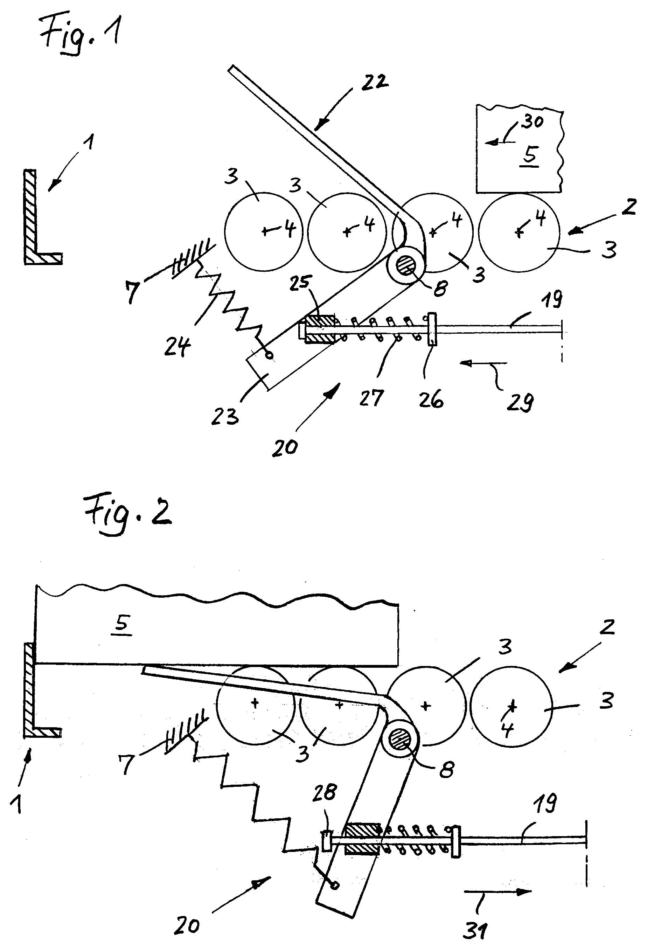

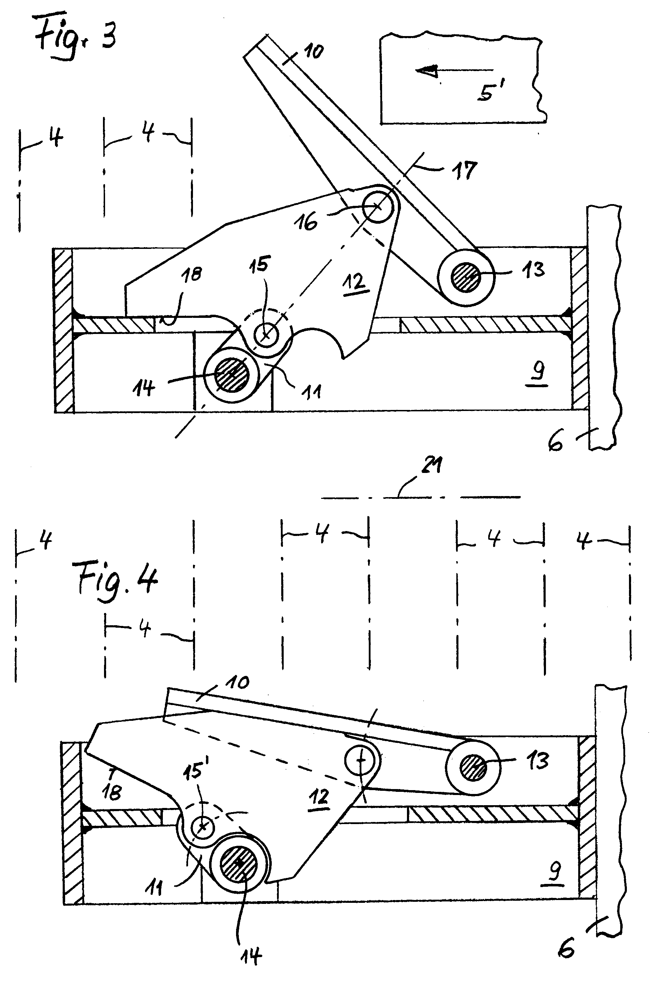

Das Fliesslager (Durchlaufregallager) hat ein Lagergestell und eine zu einer Abgabestelle 1 hin geneigte Fliesslagerbahn 2, die mit Laufrollen 3 versehen ist, die frei um Längsachsen 4 drehen. Diese Längsachsen 4 sind in den Figuren 1-4 schematisch dargestellt. Auf der Bahn 2 verfahren selbsttätig Fördergüter 5. Diese Fördergüter 5 befinden sich üblicherweise auf nicht dargestellten Paletten, wobei lediglich ein Fördergut 5 schematisch dargestellt ist. Das Lagergestell ist also ortsfest und umfasst vertikale Ständer 6 , nicht gezeigte Quertraversen sowie die Abgabestelle 1. Von den Quertraversen sind in den Figuren 1 und 2 lediglich zwei ortsfeste Abstützungen 7 und 8 gezeigt. An einem vertikalen Ständer 6 ist ein Gehäuse 9 abgestützt, das einen Teil der Steuervorrichtung trägt (Figur 3,4).

Die Steuervorrichtung umfasst einen in den Figuren 1 und 2 gezeigten vorderen Teil und einen in den Figuren 3 und 4 gezeigten hinteren Teil, wobei der vordere Teil immer vom zuvorderst liegenden Fördergut 5 nach Figur 2 betätigt werden kann. Das nachfolgende Fördergut befindet sich in der Stellung 5' (Figur 3). Wenn sich das vorderste Fördergut 5 nach Figur 2 an der Abgabestelle 1 befindet, muss das nächste Fördergut 5' (und alle nachfolgenden Fördergüter) zurückgehalten werden. Die Fördergüter werden separiert. Zum Zurückhalten nach Figur 3 und zum Freigeben nach Figur 4 dient die Steuervorrichtung.

Die Steuervorrichtung hat einen Anschlag 10 und ein aus einem ersten Schwenkarm 11 und einem zweiten Schwenkarm 12 bestehendes Kniegelenk. Der Anschlag 10 hat eine gestellfeste Anlenkstelle 13, und der erste Schwenkarm 11 hat eine gestellfeste Anlenkstelle 14. Die beiden Schwenkarme 11 und 12 haben eine gemeinsame Anlenkstelle 15. Der zweite Schwenkarm 12 hat eine Anlenkstelle 16 am Anschlag 10. In Figur 3 befindet sich das Kniegelenk 11,12 in seiner Totpunktstellung, da die drei Anlenkstellen 14,15 und 16 auf einer Geraden 17 liegen.

Der zweite Schwenkarm 12 des Kniegelenks hat somit eine erste Anlenkstelle 15 für den ersten Schwenkarm 11, eine zweite Anlenkstelle 16 für den Anschlag 10 und einen Endanschlag 18 für das Lagergestell 9,6. Man kann also sagen, der zweite Schwenkarm 12 des Kniegelenks ist als zweiarmiger Kipphebel ausgebildet, wobei die erste Anlenkstelle 15 im mittleren Bereich des Kipphebels liegt und die zweite Anlenkstelle 16 sowie der Endanschlag 18 zu beiden Seiten der ersten Anlenkstelle 15 liegen. Der erste Schwenkarm 11 des Kniegelenks hat also die zwei Achsen 14 und 15, deren Abstand voneinander konstruktionsbedingt minimalisiert wird und zweckmässig im Bereich von 20-30 mm liegt. Der zweite Schwenkarm 12 des Kniegelenks hat die beiden Schwenkachsen 15 und 16, die seinen Hebelarm bedeuten. Das Verhältnis der Hebelarme vom zweiten Schwenkhebel 12 zum ersten Schwenkhebel 11 liegt mit Vorteil im Bereich von 3,2 bis 3,5.

Der Antrieb und damit die Betätigung des in den Figuren 3 und 4 gezeigten Kniegelenks 11,12 erfolgt über die im Lagergestell 9,6 drehbar gelagerte Welle 14, die also vertikal steht. Mit dieser antreibenden Welle 14 ist der erste Schwenkarm 11 des Kniegelenks drehfest verbunden. Zum Betätigen des Kniegelenks, entweder in die Stellung nach Figur 3 oder in die Stellung nach Figur 4, wird also die Welle 14 etwas gedreht, und dies erfolgt über eine Stange 19 des des in den Figuren 1 und 2 gezeigten Betätigungsgestänges 20. Da die Stange 19 aber in der Horizontalen verstellbar ist, die davon angetriebene Welle 14 aber in der Vertikalen liegt, muss zwischen Stange 19 und Welle 14 eine solche Bewegungsverbindung vorgesehen werden, die diese Bewegungsübertragung erlaubt. Es wird hierbei mit bekannten Maschinenelementen gearbeitet, wie Schwenkhebel und einen beidseitig angelenkten Stössel mit sphärischer Gelenkpfanne. Diese bekannten Mittel zur erläuterten Bewegungsübertragung sind nicht dargestellt.

Die Figuren 3 und 4 sind also Draufsichten auf den Anschlag 10. In der Praxis wird der Anschlag 10 in spiegelbildlicher Ausführung zu beiden Seiten der Fliesslagerbahn 2 vorgesehen, liegt also spiegelbildlich zur Symmetrieachse 21 vor. Ein ankommendes Fördergut 5 trifft dann also mit seinen beiden vorderen Ecken auf zwei spiegelbildlich einander gegenüberliegende Anschläge 10, wobei nur ein Anschlag 10 dargestellt ist.

Die Stange 19 des Betätigungsgestänges 20 ist mit einer Schwenkfahne 22 bewegungsverbunden. Die Schwenkfahne 22 hat einen Arm 23, an dem eine Zugfeder 24 angreift, die das Bestreben hat, die Schwenkfahne 22 in die Stellung nach Figur 1 zu ziehen. Die Schwenkfahne 22 mit Arm 23 ist einstückig und um die gestellfeste Achse 8 schwenkbar. Im Arm 23 ist ein Lagerblock 25 schwenkbar gelagert, in dem die Stange 19 verschiebbar geführt ist. Die Stange 19 hat eine daran befestigte Scheibe 26, und zwischen Lagerblock 25 und Scheibe 26 liegt eine Schraubendruckfeder 27. Die Stange 19 hat einen Anschlag 28. In der Stellung nach Figur 1 wird die Schwenkfahne 22 mittels der Feder 24 in die gezeigte Stellung geschwenkt, wobei die Stange 19 des Betätigungsgestänges 20 in Richtung eines Pfeiles 29 gezogen wird, wodurch die in Figur 4 gezeigte Antriebswelle 14 in eine solche Stellung gedreht worden ist, dass das Kniegelenk nicht in der Totpunktstellung liegt. Die gemeinsame Anlenkstelle von erstem und zweitem Schwenkarm 11 und 12 liegt in der Stellung 15'. In dieser Stellung nach Figur 4 ist also der Anschlag 10 für das zuvorderst liegende Fördergut 5 nicht wirksam, so dass dieses sich nach Figur 1 in Richtung eines Pfeiles 30 in Richtung zur Abgabestelle 1 hin bewegen kann. Hierbei läuft das Fördergut über die Schwenkfahne 22 und drückt diese in die Stellung nach Figur 2. Dies ist möglich, da sich die Schwenkfahne 22 von unten hinten nach oben vorwärts in der Förderrichtung der Fliesslagerbahn 2 erstreckt. Bei Stellung nach Figur 2 ist die Stange 19 in Richtung eines Pfeiles 31 bewegt worden, und hierdurch wird die Antriebswelle 14 in Figur 4 im Uhrzeigersinn gedreht, so dass der mit ihr drehfest verbundene erste Schwenkarm 11 in die Stellung nach Figur 3 bewegt wird. Hierbei wird der zweite Schwenkarm 12 ebenfalls in seine Stellung nach Figur 3 soweit geschwenkt, dass sein Endanschlag 18 am Gehäuse 9 anliegt. In dieser Lage der beiden Schwenkarme 11 und 12 befindet sich das Kniegelenk 11,12 in seiner Totpunktstellung. Zur Vermeidung von Doppelfixierung ist im Betätigungsgestänge 20 eine Ausweicheinrichtung angebracht, damit die Schwenkfahne 22 durch das Fördergut 5 noch mehr nach unten gedrückt werden kann, ohne dass die Stange 19 weiter verschoben wird, da sich der Endanschlag 18 vom Kniegelenk bereits in seiner Endstellung nach Figur 3 befindet. Diese Ausweicheinrichtung hat also zur Folge, dass die Stange 19 nicht verbogen oder zerstört wird. Die Ausweicheinrichtung umfasst die in Figur 1 gezeigte Scheibe 26, Druckfeder 27 und die Verschiebbarkeit der Stange 19 im Lagerblock 25. Bei anliegendem Endanschlag 18 in der Stellung nach Figur 3 hat ein weiteres Verschwenken der Schwenkfahne 22 ein Verschieben des Lagerblocks 25 auf der Stange 19 zur Folge.

In der Praxis hat sich gezeigt, dass es zweckmässig ist, wenn die Lagerstellen des Betätigungsgestänges möglichst leichtgängig sind, so dass z.B. die Antriebswelle 14 in nicht dargestellten Wälzlagern am Gehäuse 9 gelagert ist. Da, wie schon gesagt, der Anschlag 10 spiegelbildlich auf der anderen Seite der Fliesslagerbahn 2 ebenfalls vorliegt, liegt die Bewegungsebene des Anschlags 10 bzw. der beiden Anschläge 10, in der Horizontalen. Mittels der Kraft der Zugfeder 24 in Figur 1 ist es also alleine möglich, die Stange 19 in Richtung des Pfeiles 29 zu verschieben und das in Figur 3 gezeigte Kniegelenk aus seiner Totpunktstellung heraus in die Stellung nach Figur 4 zu bewegen.

Ganz wichtig ist, dass in der Totpunktstellung des Kniegelenks nach Fig. 3 die Bauteile 9,10,11 und 12 formschlüssig miteinander verblockt sind, also ohne Zwischenschaltung einer Feder im Kraftfluss. Die Abstützung dieses Blocks 9,10,11,12 erfolgt am Ständer 6 des Lagergestells.

## Patentansprüche

1. Fliesslager-Separator, mit einer Steuervorrichtung am Lagergestell zur Abgabe von selbsttätig verfahrbaren Fördergütern (5,5') aus dem Fliesslager, wobei die Fliesslagerbahn (2) zu einer Abgabestelle (1) hin geneigt ist, mit einem vor der Abgabestelle (1) befindlichen steuerbaren Anschlag (10) zum Separieren der Fördergüter (5,5'), dadurch gekennzeichnet, dass sich zwischen einem Betätigungsgestänge (20) und dem Anschlag (10) ein Kniegelenk (11,12) mit Totpunktstellung (17) befindet, und dass das Betätigungsgestänge (20) mit einer Schwenkfahne (22) bewegungsverbunden ist, die in und aus dem Bewegungsweg eines an der Abgabestelle (1) befindlichen Fördergutes (5) am Gestell (8) schwenkbar angelenkt ist zum Verschwenken des Kniegelenks (11,12) in seine oder aus seiner Totpunktstellung (17) und damit zum Aktivieren oder Inaktivieren des Anschlages (10), und dass in der Totpunktstellung das Kniegelenk (11,12), der Anschlag (10) und ein Teil (9) des Lagergestells formschlüssig miteinander verblockt sind, ohne Zwischenschaltung einer Feder im Kraftfluss, und mit einer an der Schwenkfahne (22) angreifenden Feder (24) zum Halten der Schwenkfahne (22) im Bewegungsweg der Fördergüter (5,5').

2. Separator nach Anspruch 1, dadurch gekennzeichnet, dass ein erster Schwenkarm (11) des Kniegelenkes sich am Betätigungsgestänge (14,20) und ein zweiter Schwenkarm (12) des Kniegelenkes sich am Anschlag (10) befindet.

3. Separator nach Anspruch 1 oder 2, dadurch gekennzeichnet, dass sich die Schwenkfahne (22) von unten hinten nach oben vorwärts in der Förderrichtung der Fliesslagerbahn (2) erstreckt.

4. Separator nach einem der Ansprüche 1 bis 3, dadurch gekennzeichnet, dass der Anschlag (10) als Klinke ausgebildet ist, die am Gestell (9,6) schwenkbar angelenkt ist.

5. Separator nach einem der Ansprüche 1 bis 4, dadurch gekennzeichnet, dass das Kniegelenk (11,12) und der Anschlag (10) in horizontalen Ebenen liegen und dem zufolge um vertikal stehende, am Lagergestell (9,6) abgestützte Welle (14) bzw. Achse (13) schwenkbar sind.

6. Separator nach einem der Ansprüche 1 bis 5, dadurch gekennzeichnet, dass im Betätigungsgestänge (20) eine Ausweicheinrichtung (25-28) zwischengeschaltet ist, zum Verkürzen der wirksamen Länge des Betätigungsgestänges (20) beim Liegen des Kniegelenks (11,12) in seiner Totpunktstellung (17).

7. Separator nach einem der Ansprüche 1 bis 6, dadurch gekennzeichnet, dass das Kniegelenk aus dem antreibenden ersten Schwenkarm (11) und dem angetriebenen zweiten Schwenkarm (12) besteht, wobei letzterer (12) eine erste Anlenkstelle (15) für den ersten Schwenkarm (11) und eine zweite Anlenkstelle (16) für den Anschlag (10) sowie einen Endanschlag (18) für das Lagergestell (9,6) aufweist, dass der erste Schwenkarm (11) mit einer Antriebswelle (14) versehen ist, und dass bei wirksamem Endanschlag (18) die Achsen von Antriebswelle (14), erster Anlenkstelle (15) und zweiter Anlenkstelle (16) in einer Geraden (17) liegen, die die Totpunktlage des Kniegelenkes (11,12) ist.

8. Separator nach einem der Ansprüche 1 bis 7, dadurch gekennzeichnet, dass das Kniegelenk (11,12) und der Anschlag (10) in spiegelbildlicher Ausführung vorhanden sind und beidseits der Fliesslagerbahn (2) liegen, wobei die Symmetrieachse (21) der beiden spiegelbildlich einander gegenüberliegenden Anschläge (10) in der Mitte der Fliesslagerbahn (2) liegt.

9. Separator nach einem der Ansprüche 1 bis 8, dadurch gekennzeichnet, dass der mit dem Betätigungsgestänge (20) bewegungsverbundene erste Schwenkarm (11) des Kniegelenks (11,12) zwei Achsen (14,15) aufweist, deren Abstand voneinander im Bereich von 20 bis 30 mm liegt.

10. Separator nach den Ansprüchen 1, 3 und 6, dadurch gekennzeichnet, dass die Ausweicheinrichtung (25-28) einen an der Schwenkfahne (22) angebrachten Lagerblock (25) umfasst, in dem eine Stange (19) des Betätigungsgestänges (20) gegen die Kraft einer Feder (27) längsverschiebbar geführt ist, so dass beim Liegen des Kniegelenkes (11,12) in seiner Totpunktstellung (17) ein weiteres Schwenken der Schwenkfahne (22) ein Verschieben des Lagerblockes (25) gegen die Kraft der Feder (27) entlang der Stange (19) des Betätigungsgestänges (20) zur Folge hat.

11. Separator nach Anspruch 7, dadurch gekennzeichnet, dass der am Anschlag (10) angelenkte zweite Schwenkarm (12) des Kniegelenks (11,12) als zweiarmiger Kipphebel ausgebildet ist, wobei die erste Anlenkstelle (15) im mittleren Bereich des Kipphebels liegt und die zweite Anlenkstelle (16) sowie der Endanschlag (18) zu beiden Seiten der ersten Anlenkstelle (15) liegen.

12. Separator nach einem der Ansprüche 1 bis 11, dadurch gekennzeichnet, dass das Verhältnis der Hebelarme (15, 16; 14,15) vom zweiten Schwenkhebel (12) zum ersten Schwenkhebel (11) des Kniegelenkes im Bereich von 3,2 bis 3,5 liegt.
